# EUROPEAN PATENT APPLICATION

(11) **EP 4 769 098 A1**
(43) Date of publication of application: **01.07.2026**
(21) Application number: 24855841.3
(22) Date of filing: 21.08.2024
(51) Int. Cl.: G06F 3/0483

(54) **INFORMATION PROCESSING METHOD AND APPARATUS, ELECTRONIC DEVICE AND STORAGE MEDIUM**

(30) Priority: 21.08.2023 CN 202311056067
(71) Applicant: Beijing Zitiao Network Technology Co., Ltd., Beijing 100190 (CN)
(72) Inventor: LIU, Fujia, Beijing 100028 (CN); WU, Yuting, Beijing 100028 (CN); WANG, Ruifeng, Beijing 100028 (CN)
(74) Representative: Marks & Clerk LLP
(86) International application number: PCT/CN2024/113663
(87) International publication number: WO 2025/040119

(57) **Abstract**

Embodiments of the present disclosure provide an information processing method and apparatus, an electronic device and a storage medium. The method comprises: in response to determining that a first operation received in a content comment section meets a preset trigger condition, displaying an image Easter egg, wherein a picture publishing control is displayed in the image Easter egg; receiving a first picture inputted by a first user on the basis of the picture publishing control, and generating a target comment comprising the first picture; and publishing the target comment.

## Description

The present application claims priority to Chinese Patent Application No. 202311056067.2, filed on August 21, 2023, which is incorporated herein by reference in its entirety as a part of the present application.

### TECHNICAL FIELD

Embodiments of the present disclosure relate to an information processing method and apparatus, an electronic device, and a storage medium.

### BACKGROUND

With the development of Internet technologies, posters can post information content such as videos, audio, and text on the Internet, and consumers can browse the information content via the Internet. The consumers can also make comments on the information content posted by the posters. Through the comments, interaction between different users can be realized.

### SUMMARY

Embodiments of the present disclosure provide an information processing method and apparatus, an electronic device, and a storage medium.

According to a first aspect, an embodiment of the present disclosure provides an information processing method. The method includes: presenting an Easter egg image in response to determining that a first operation received in a content comment section meets a preset trigger condition, where an image posting control is presented in the Easter egg image; receiving a first image input by a first user through the image posting control, and generating a target comment that includes the first image; and posting the target comment.

According to a second aspect, an embodiment of the present disclosure provides an information processing apparatus. The apparatus includes: a presentation unit configured to present an Easter egg image in response to determining that a first operation received in a content comment section meets a preset trigger condition, where an image posting control is presented in the Easter egg image; a generation unit configured to receive a first image input by a first user through the image posting control, and generate a target comment that includes the first image; and a posting unit configured to post the target comment.

According to a third aspect, an embodiment of the present disclosure provides an electronic device. The electronic device includes: a processor and a memory, where the memory stores computer-executable instructions; and the processor executes the computer-executable instructions stored in the memory, to cause the at least one processor to perform the information processing method according to the first aspect and various possible designs of the first aspect.

According to a fourth aspect, an embodiment of the present disclosure provides a computer-readable storage medium. The computer-readable storage medium has stored therein computer-executable instructions that, when executed by a processor, cause the information processing method according to the first aspect and various possible designs of the first aspect to be implemented.

According to a fifth aspect, an embodiment of the present disclosure provides a computer program product including a computer program that, when executed by a processor, causes the information processing method according to the first aspect and various possible designs of the first aspect to be implemented.

### BRIEF DESCRIPTION OF DRAWINGS

**In** order to describe the technical solutions in embodiments of the present disclosure or in the prior art more clearly, the accompanying drawings for describing the embodiments or the prior art are briefly described below. Apparently, the accompanying drawings in the following description are some embodiments of the present disclosure, and those of ordinary skill in the art may still derive other accompanying drawings from these accompanying drawings without creative efforts.
Fig. 1 is a first schematic flowchart of an information processing method according to the present disclosure;
Fig. 2 is a schematic diagram of an application scenario;
Fig. 3 is a schematic diagram of an application scenario;
Fig. 4 is a second schematic flowchart of an information processing method according to the present disclosure;
Fig. 5 is a third schematic flowchart of an information processing method according to the present disclosure;
Fig. 6 is a schematic diagram of an application scenario;
Fig. 7A and Fig. 7B are schematic structural diagrams of an information processing apparatus according to the present disclosure; and
Fig. 8 is a schematic structural diagram of hardware of an electronic device according to an embodiment of the present disclosure.

### DETAILED DESCRIPTION

**In** order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

For information content posted on the Internet, such as videos, audio, text, and topics posted on a social media platform, a user can post their own comments when browsing the information content. Content of the comments may include words, symbols, graphics, images, etc. Comments posted by at least one user may be presented in a comment section for the information content. The comments in the comment section may also be browsed by different users. Different users may also perform reply, like, and other operations on the comments of their interest.

To increase interactivity and fun in the comment section, an Easter egg may be set in the comment section.

Currently, the Easter egg set in the comment section is usually an Easter egg with fixed display content that is configured by a server, only presenting an effect such as a particular animation, which fails to satisfy the users' interactive need.

In an information processing method provided in the present disclosure, presenting an image posting control in a triggered Easter egg image allows the user to post a comment including an image through the posting control, which can improve the efficiency of information interaction.

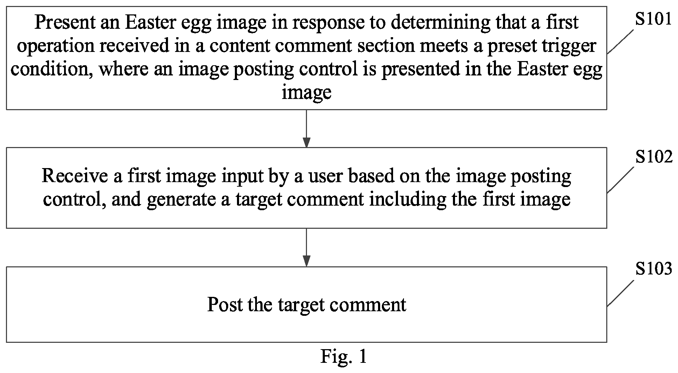

Refer to Fig. 1, which is a first schematic flowchart of an information processing method according to the present disclosure. As shown in Fig. 1, the information processing method includes the following steps.

S101: Present an Easter egg image in response to determining that a first operation received in a content comment section meets a preset trigger condition, where an image posting control is presented in the Easter egg image.

An execution entity of the information processing method of this embodiment may be a client running on a terminal device, or may be a server serving the client.

The content comment section may be a comment section for content posted on various Internet media platforms. The content includes, but is not limited to, multimedia content such as audio, videos, and text.

The media platform may provide a comment function for information content posted thereon. Therefore, the user may post a comment on information content or on a comment on the information content as needed.

In some application scenarios, the content may be topic content. For example, a poster posts a topic, and different users post under the topic comments corresponding to the topic. Illustratively, the topic content may be, for example, "Share your favorite food." Under this topic, a user who browses this topic may input an image and text information of his/her favorite food in a comment section of this topic.

The content comment section may be a comment section for content posted on the media platform.

The user may browse the content comment section when browsing media information content, or may browse the content comment section separately. The content comment section may include at least one comment.

The user can also perform, in the content comment section, a first operation such as posting comment information, inputting comment information, or liking existing comment information.

A trigger condition may be preset, and the above-mentioned preset trigger condition is used to trigger the Easter egg image.

When the first operation performed by the user in the content comment section meets the preset trigger condition, the Easter egg image may be presented.

In some embodiments, the preset trigger condition includes one of the following conditions: preset comment content associated with the Easter egg image being posted; the preset comment content being included in information input in a comment information input box; or trigger operation being performed on a first control associated with the Easter egg image.

In some application scenarios, the preset trigger condition includes: preset comment content associated with the Easter egg image being posted.

The preset comment content may include preset text content or symbol content. The preset text content may include one or more pre-specified words. As an illustrative description, the preset text content may include, for example, "Sunset glow", "Exchange the sunset glow", "Food images", etc.

In these embodiments, the user may post the preset comment content in the comment section. When it is determined that the user has posted the preset comment content, the Easter egg image may be presented to the user, where the Easter egg image may include still or dynamic image information.

In some application scenarios, the Easter egg image trigger condition includes the preset comment content being included in the information input in the comment information input box.

In these embodiments, an information input box may be provided in the content comment section. The user may input text, images, and other comment content in the information input box. It can be understood that with full authorization from the user, when it is determined that the user has input the preset comment content in the information input box, the Easter egg image may be triggered for display.

In these embodiments, the user may trigger the Easter egg image for display by inputting the preset comment content in the information input box of the comment section.

In some application scenarios, the Easter egg image trigger condition includes the trigger operation being performed on the first control associated with the Easter egg image. The first control may be a control for performing like and other operations. The first control may be pre-associated with the Easter egg image.

In these embodiments, the user triggers the Easter egg image for display by performing the trigger operation on the first control.

S102: Receive a first image input by a user through the image posting control, and generate a target comment that includes the first image.

In this embodiment, the user may use the image posting control to input the first image. After receiving the first image, the execution entity may generate the target comment including the first image.

In some embodiments, step S102 includes the following sub-steps.

First, a media content obtaining interface is displayed in response to receiving a trigger operation performed by the user on the image posting control.

The media content obtaining interface may be a shooting interface or an image upload interface.

In these embodiments, the media content obtaining interface may be the image upload interface. The user may perform a trigger operation on the image posting control displayed in step S101. After receiving the trigger operation, the execution entity may first determine whether it has permission to access a local image library, or whether it has permission to access a user image library stored by the user in a cloud. If it is determined that the execution entity has the access permission, the execution entity may access the local image library, or may access the user image library stored in the cloud. If it is determined that the execution entity has no access permission, the execution entity may send permission request information to the user, and the user may perform an authorization or refusal-of-authorization operation based on the permission request information.

Second, a selection operation performed by the user on at least one user image in the media content obtaining interface is received.

Finally, a user image indicated by the selection operation is determined as the first image.

The user may perform the selection operation on one or more of a plurality of user images displayed in the media content obtaining interface, so that one or more images indicated by the selection operation are used as the first image input by the user.

In this embodiment, if the user inputs only the first image, the target comment including only the first image may be generated.

The first image may be one image, or may be more than one image.

In other embodiments, the media content obtaining interface may be the shooting interface.

In these embodiments, the user may perform the trigger operation on the image posting control displayed in step S101. After receiving the trigger operation, the execution entity may call an image acquisition apparatus (e.g., a camera) through a preset interface, and present a shooting interface corresponding to the image acquisition apparatus. The user may perform an image shooting operation in the shooting interface. The execution entity may use, as the first image, an image obtained through the image shooting operation. As an illustrative description, the execution entity may display the first image in the information input box of the comment section, so that the user can view the first image of their choice prior to posting a comment, so as to confirm whether to post the image.

In some embodiments, step S102 includes: first, receiving a first image and a comment text that are input by the user based on triggering the image posting control; and second, generating a target comment that includes the first image and the comment text.

In these embodiments, the user may use the image posting control to post the first image and the comment text. The execution entity may receive the first image and the comment text that are input by the user through a trigger operation performed by the user on the image posting control. The comment text may include one or more of letters, words, numbers, or symbols.

As an illustrative description, the execution entity may display the first image in the information input box of the comment section, and the user may also input the comment text in the information input box. Therefore, the input includes the first image and the comment text. The execution entity may generate the target comment including the first image and the comment text based on the first image displayed in the information input box and the comment text input by the user in the information input box.

As an example, the execution entity sets the first image and the comment text that are input by the user according to a preset display style, so as to obtain the target comment including the first image and the comment text. When the target comment is presented after being posted, the comment text may be set at an associated position of the first image, for example, above the first image; or the comment text may be set below the first image, or even the comment text may be placed on the first image, etc.

In these embodiments, the user can post both an image and comment text in one comment through the image posting control, which can improve the efficiency of user interaction.

S103: Post the target comment.

In some application scenarios, a send control may be set in the input box of the comment section. After confirming the need to post the first image, the user may perform a trigger operation on the send control corresponding to the input box. After receiving the trigger operation performed on the send control, the execution entity may perform a post operation to post the target comment input by the user.

The post operation may be, for example, sending the target comment to the server, which may deliver the target comment to clients. Thus, the clients may present the target comment including the first image.

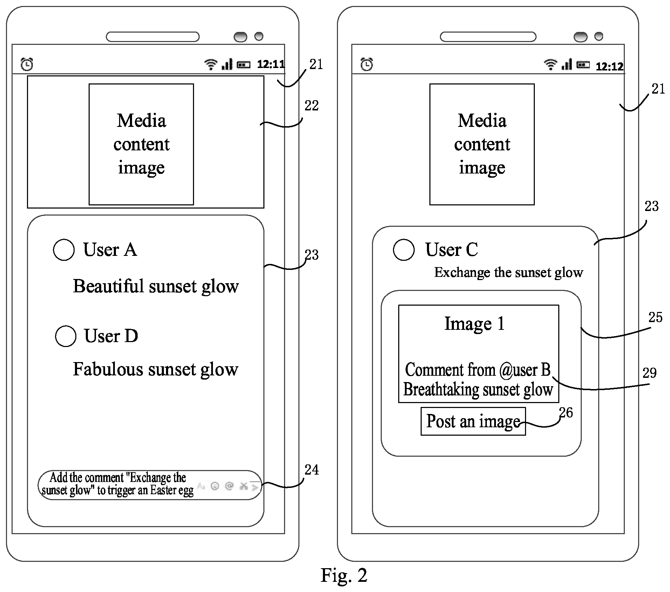

Refer to Fig. 2, which is a schematic diagram of an application scenario. As shown in Fig. 2, information content (including a media content image) 22 and a content comment section 23 are displayed in a display interface 21. In the content comment section 23, comments posted by a plurality of users may be displayed, for example, comments respectively posted by a user A and a user D, etc. A user C inputs "Exchange the sunset glow" in an information input box 24, and posts "Exchange the sunset glow" in the content comment section 23. After the user C posts the comment "Exchange the sunset glow", an Easter egg image 25 may be presented in the display interface 21 of the user C. An image posting control 26 may be presented in the Easter egg image 25.

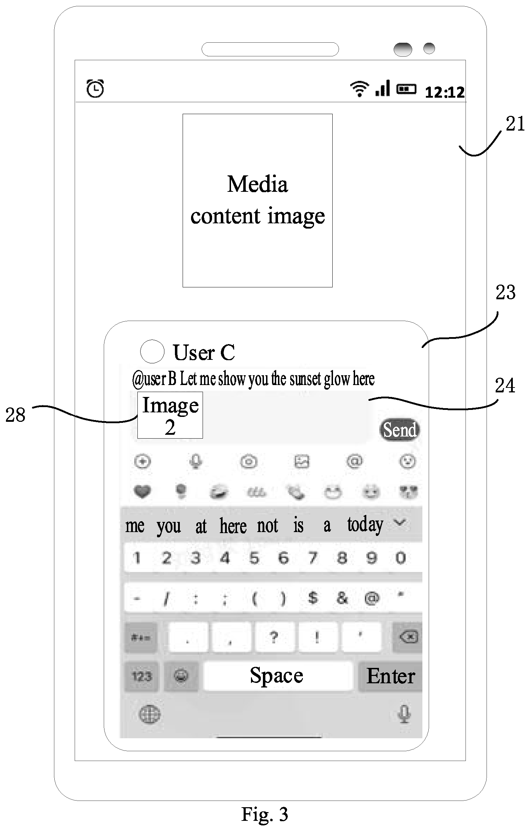

Referring to Fig. 2 and Fig. 3, Fig. 3 is a schematic diagram of an application scenario. As shown in Fig. 3, when viewing the Easter egg image 25, the user C may perform a trigger operation on the image posting control 26. The media content obtaining interface may be presented after the trigger operation on the image posting control 26 is received. At least one user image may be presented in the media content obtaining interface. The user C may perform a selection operation on the at least one user image. After the selection operation of the user C is received, a user image indicated by the selection operation may be used as the first image. The execution entity may display the first image 28 (i.e., an image 2 shown in Fig. 3) in the information input box 24. The user C may also input text content in the information input box 24, for example "Let me show you the sunset glow here" as shown in Fig. 3. The execution entity may generate a target comment based on the first image 28 and the above-mentioned text content that are input by the user. After completing the input of the first image and the input of the text content, the user C may perform a trigger operation on the send control in the information input box to post the target comment including the first image and the text content.

**In** this embodiment, the Easter egg image is presented in response to determining that the first operation received in the content comment section meets the Easter egg image trigger condition, where the image posting control is presented in the Easter egg image; the first image input by the user through the image posting control is received, and the target comment including the first image is generated; and the target comment is posted. In this way, the efficiency of information interaction can be improved by posting the comment including the image by using the image posting control presented in the triggered Easter egg.

In some embodiments, before receiving the first operation, the information processing method further includes: displaying guidance information in the content comment section, the guidance information being used to guide the execution of an operation that meets the preset trigger condition.

As an illustrative description, the guidance information may be guidance information that is displayed in the content comment section to instruct the user to post the preset comment content. Still referring to Fig. 2, as shown in Fig. 2, in the information input box 24 of the content comment section 23, guidance information "Leave a comment "Exchange the sunset glow" to trigger the Easter egg" may be displayed. The guidance information is used to guide the user to post "Exchange the sunset glow" to trigger the Easter egg image. Based on the guidance information, the user may post "Exchange the sunset glow" in the content comment section to trigger the Easter egg image.

As an illustrative description, the guidance information may be guidance information that is displayed in the information input box to instruct the user to input the preset comment content in the information input box. For example, "Enter "Exchange the sunset glow" to trigger the Easter egg", etc. may be presented in the information input box.

As an illustrative description, the guidance information includes guidance information for instructing the user to perform the trigger operation on the first control associated with the Easter egg image. For example, the guidance information includes an arrow pointing to the first control, accompanied by a text description "Trigger this control to display an Easter egg image".

In some embodiments, at least one second image is further presented in the Easter egg image, where the second image is obtained by the following steps: obtaining a plurality of images already posted in the content comment section; determining, from the plurality of images, at least one image that meets a preset condition to form an Easter egg image set; and presenting the at least one second image in the Easter egg image set in response to receiving a first operation from the user that meets the preset trigger condition.

In some application scenarios, the process of obtaining the second image may be executed by the server. As an example, with the authorization from a poster, a plurality of posted images may be determined from comment information corresponding to the content comment section to determine whether the plurality of images meet the preset condition. The preset condition may include, for example, a number of reply messages being greater than a first preset threshold; or a number of likes being greater than a second preset threshold, etc. The first preset threshold and the second preset threshold may be set depending on specific application scenarios, and are not limited here. **In** addition, the preset condition may also include an image clarity being greater than a preset clarity threshold, etc. The preset clarity threshold may be set depending on specific application scenarios, and is not limited here.

As an implementation, the server may store at least one image that meets the preset condition as the Easter egg image set.

As an implementation, upon receiving the first operation from the user that meets the preset trigger condition, the server may determine, from the Easter egg image set, at least one image randomly or according to a preset order of selection and send the at least one image to the client. The at least one image is the second image. The server instructs the client to display the at least one second image in the Easter egg image.

As an implementation, the server may determine the at least one second image from the Easter egg image set in advance. For example, the at least one second image may be determined from the Easter egg image set randomly or according to a preset order. Upon receiving the first operation from the user that meets the preset trigger condition, the server instructs the client to display the at least one second image in the Easter egg image.

In some application scenarios, the step of obtaining the second image may also be executed by the client. The execution process may be similar to that of the server, and will not be repeated here.

In these embodiments, the image in the Easter egg image set may be an image previously posted by the user in the comment section. By using the image previously posted in the comment section as the image displayed in the Easter egg image, the impression rate of the image and the efficiency of user interaction can be improved.

Furthermore, the second image in the Easter egg image displayed in different user display interfaces may vary.

In some embodiments, the second image presented in the Easter egg image is associated with the preset comment content.

**In** some application scenarios, an association relationship may be pre-established between the second image to be presented in the Easter egg image and the preset comment content. Specifically, the second image may be stored in association with the preset comment content, or mapping between the second image and the preset comment content may be established.

When the user inputs or posts the preset comment content, the second image may be obtained based on the association relationship, and then displayed in the Easter egg image.

In these embodiments, by associating the second image with the preset comment content, the second image displayed in the Easter egg image may be quickly determined through the association relationship, which can improve the efficiency of presenting the Easter egg image.

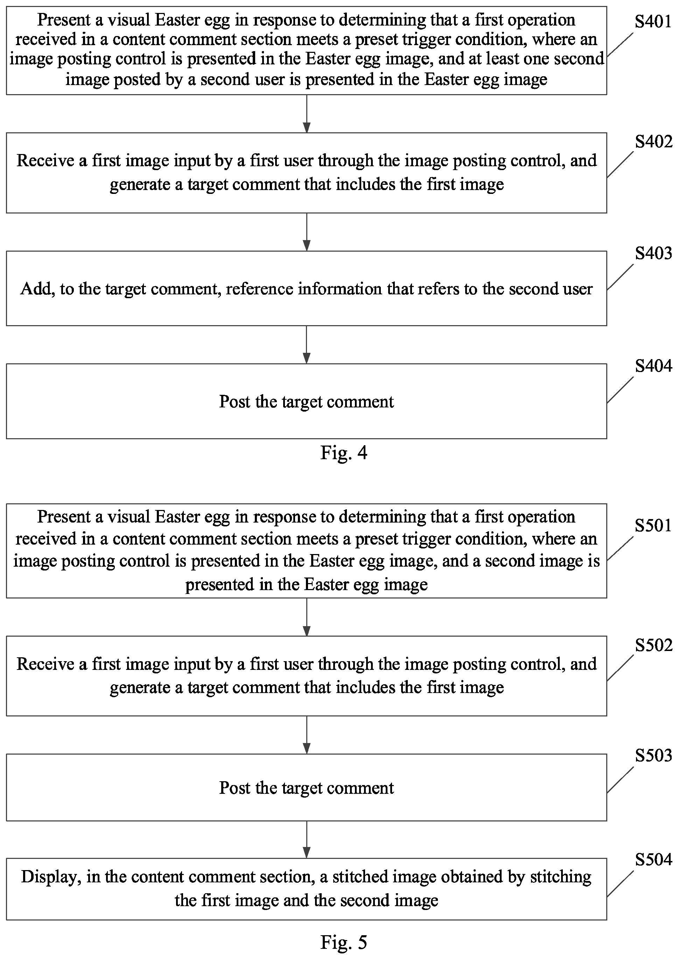

Continue to refer to Fig. 4, which is a second schematic flowchart of an information processing method according to the present disclosure. As shown in Fig. **4****,** the method includes the following steps.

S401: Present an Easter egg image in response to determining that a first operation received in a content comment section meets a preset trigger condition, where an image posting control is presented in the Easter egg image; and at least one second image posted by a second user is presented in the Easter egg image.

An execution entity of the information processing method of this embodiment may be a client running on a terminal device, or may be a server serving the client.

For specific implementation of step S401, reference may be made to a description of related parts of the embodiment shown in Fig. 1, which will not be repeated here.

**In** some embodiments, the second image may be associated with preset comment content. The preset comment content may be comment content required to meet the preset trigger condition.

In some embodiments, the second image may be obtained by the following steps: obtaining a plurality of images already posted in the content comment section; determining, from the plurality of images, at least one image that meets a preset condition to form an Easter egg image set; and presenting the at least one second image in the Easter egg image set in response to receiving an Easter egg trigger operation from the user.

In some embodiments, comment text posted by the second user is further presented in the Easter egg image.

Referring to Fig. 2, the comment text posted by the second user may be displayed in the Easter egg image 25. The comment text includes user information indicating the second user who posts the comment text, and content of the comment text. The user information includes "Comment from @user B" as shown in Fig. 2, and the content of the comment text includes "Breathtaking sunset glow".

In these embodiments, the second image and comment text related to the second image that are posted by the second user may be viewed in the Easter egg image. The first user no longer needs to check the comment section, and can learn of details of the comment posted by the second user through the image East egg, which can save the time the first user would spend checking the details of the comment from the second user in the comment section.

**In** some embodiments, the comment text is displayed at an associated position of the second image.

In some application scenarios, the associated position of the second image may include a position above the second image, a position below the second image, etc.

**In** some application scenarios, the associated position of the second image may be a position on the second image.

As shown in Fig. 2, the comment text "Breathtaking sunset glow" posted by the second user is displayed on the second image. **In** this way, the comment content including the second image can be fully presented in the Easter egg image.

S402: Receive a first image input by a first user through the image posting control, and generate a target comment that includes the first image.

**In** this embodiment, the first user and the second user may be the same user or different users.

That is, when a first operation performed by the first user in the content comment section meets the preset trigger condition, the Easter egg image, for example the Easter egg image 25 as shown in Fig. 2, may be triggered. A second image 29 previously posted by the second user (e.g., the user B) in the content comment section may be displayed in the Easter egg image 25. The first user may perform a trigger operation on the image posting control 26 displayed in the Easter egg image, so as to input the first image 28. The execution entity may generate a target comment including the first image 28 based on the first image 28 and text content that are input by the user.

S403: Add, to the target comment, reference information that refers to the second user.

S404: Post the target comment.

In this embodiment, the execution entity may add, to the target comment, the reference information that refers to the second user.

Referring to Fig. 3, the second user may be the user B, and the reference information that refers to the second user (i.e., the user B), for example, "@user B", may be added to the target comment displayed in the information input box.

The target comment including the reference information may be posted in a content posting section.

After the execution entity posts the target comment, the second user (for example, the user B) may receive relevant notification information to inform the second user that the first user has posted the first image in response to the second image posted by the second user, thereby realizing image comment-based interaction.

Compared with the embodiment shown in Fig. 1, this embodiment describes displaying, in the Easter egg image, the second image posted by the second user and adding, to the generated target comment including the first image, the reference information that refers to the second user, thereby realizing image comment-based interaction through the Easter egg image and increasing channels for information communication between users.

Continue to refer to Fig. 5, which is a third schematic flowchart of an information processing method according to the present disclosure. As shown in Fig. 5, the method includes the following steps.

S501: Present an Easter egg image in response to determining that a first operation received in a content comment section meets a preset trigger condition, where an image posting control is presented in the Easter egg image; and a second image is presented in the Easter egg image.

S502: Receive a first image input by a first user through the image posting control, and generate a target comment that includes the first image.

S503: Post the target comment.

S504: Display, in the content comment section, a stitched image obtained by stitching the first image and the second image.

The execution entity of the information processing method of this embodiment may be a client running on a terminal device, or may be a server serving the client.

As an implementation, posting the target comment in step S503 may be, for example, sending to the server the target comment that includes the first image.

After receiving the target comment, the server may stitch the first image and the second image in the Easter egg image that is presented to the first user to obtain the stitched image.

Stitching the first image and the second image may be performed using an image stitching technology in the related art, so as to stitch the first image and the second image. The image stitching technology includes steps of image preprocessing, image matching, establishment of a transformation model, unified coordinate transformation, image fusion, etc.

The comment that is posted by the first user and displayed in the content comment section may include the stitched image. Presenting the stitched image in the content comment section can bring the user a better visual experience.

It can be understood that the process of stitching the first image and the second image may also be implemented by the client.

In some embodiments, identification information of the first user is presented at an associated position of the first image in the stitched image, and identification information of a user who posts the second image is presented at an associated position of the second image in the stitched image. It can be understood that the associated position may be a preset area within the image, a preset area outside the image, etc.

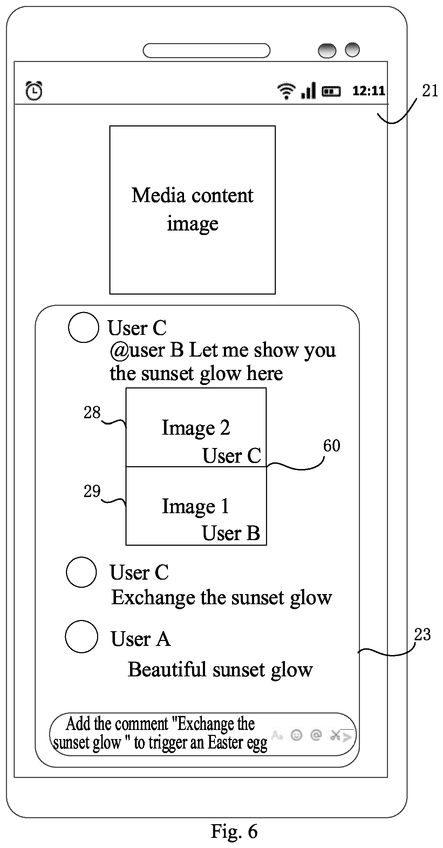

Referring to Fig. 6, after the first user posts the target comment, the stitched image 60 may be presented in the content comment section 23 displayed in the display interface 21. The stitched image may be an image obtained by stitching the first image 28 (as shown in Fig. 3) input by the first user and the second image 29 (as shown in Fig. 2) presented in the Easter egg image.

The target comment posted by the first user and presented in the content comment section may include: the text comment "Let me show you the sunset glow here", the reference information "@User B" that refers to the second user (the user B), and the stitched image 60.

Furthermore, as shown in Fig. 6, a user identifier of the first user "User C" is displayed at a position related to the first image in the stitched image (for example, a display area of the first image in the stitched image), and a user identifier of the second user "User B" is displayed at a position related to the second image in the stitched image (for example, a display area of the second image in the stitched image).

Compared with the embodiment shown in Fig. 1, this embodiment describes the content of displaying the stitched image of the first image and the second image in the content comment section, which can make the target comment more informative and can also enhance the visual effect of the content comment section.

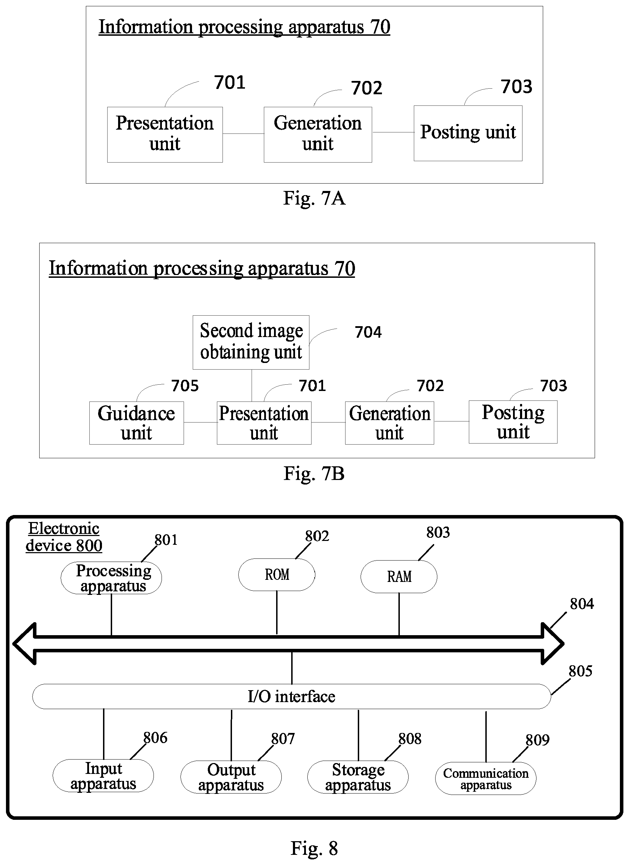

Corresponding to the information processing method in the above embodiment shown in the Fig. 1, Fig. 7A is a structural block diagram of an information processing apparatus according to an embodiment of the present disclosure. For ease of illustration, only parts related to this embodiment of the present disclosure are shown. Referring to Fig. 7A, the apparatus 70 includes: a presentation unit 701, a generation unit 702, and a posting unit 703.

The presentation unit 701 is configured to present an Easter egg image in response to determining that a first operation received in a content comment section meets a preset trigger condition, where an image posting control is presented in the Easter egg image.

The generation unit 702 is configured to receive a first image input by a first user through the image posting control, and generate a target comment that includes the first image.

The posting unit 703 is configured to post the target comment.

In some embodiments, at least one second image is further presented in the Easter egg image. As shown in Fig. 7B, the apparatus 70 further includes a second image obtaining unit 704. The second image obtaining unit 704 is configured to obtain a second image by the following steps: obtaining a plurality of images already posted in the content comment section; determining, from the plurality of images, at least one image that meets a preset condition to form an Easter egg image set; and presenting the at least one second image in the Easter egg image set in response to receiving an Easter egg trigger operation from the user.

In some embodiments, the preset trigger condition includes one of the following conditions: preset comment content associated with the Easter egg image being posted; the preset comment content being included in information input in a comment information input box; or a trigger operation being performed on a first control associated with the Easter egg image.

In some embodiments, the second image presented in the Easter egg image is associated with the preset comment content.

In some embodiments, the generation unit 702 is further configured to: receive a first image and comment text that are input by the user by triggering the image posting control; and generate comment content that includes the first image and the comment text.

In some embodiments, as shown in Fig. 7B, the apparatus 70 further includes a guidance unit 705. The guidance unit 705 is configured to: display guidance information in the content comment section before the first operation is received, the guidance information being used to guide the execution of an operation that meets the preset trigger condition.

In some embodiments, the generation unit 702 is further configured to: display a media content obtaining interface in response to receiving a trigger operation performed by the user on the image posting control; receive a selection operation performed by the user on at least one user image in the media content obtaining interface; and use a user image indicated by the selection operation as the first image.

In some embodiments, at least one second image posted by a second user is presented in the Easter egg image. The generation unit 702 is further configured to: add, to the target comment, reference information that refers to the second user.

In some embodiments, comment text posted by the second user is further presented in the Easter egg image.

In some embodiments, the comment text is displayed at an associated position of the second image.

In some embodiments, a second image is presented in the Easter egg image; and the apparatus 70 further includes a display unit (not shown in the figure). The display unit is configured to: display, in the content comment section, a stitched image obtained by stitching the first image and the second image.

In some embodiments, identification information of the first user is presented at an associated position of the first image in the stitched image, and identification information of a user who posts the second image is presented at an associated position of the second image in the stitched image.

In order to implement the above-mentioned embodiments, an embodiment of the present disclosure further provides an electronic device.

Refer to Fig. 8, which is a schematic structural diagram of an electronic device 800 suitable for implementing the embodiments of the present disclosure. The electronic device 800 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in Fig. 8 is merely an example, and shall not impose any limitation on the function and scope of use of the embodiments of the present disclosure.

As shown in Fig. 8, the electronic device 800 may include a processing apparatus (for example, a central processing unit or a graphics processing unit) 801 that may perform a variety of appropriate actions and processing based on a program stored in a read-only memory (ROM) 802 or a program loaded from a storage apparatus 808 into a random access memory (RAM) 803. The RAM 803 further stores various programs and data required for the operation of the electronic device 800. The processing apparatus 801, the ROM 802, and the RAM 803 are connected to one another through a bus 804. An input/output (I/O) interface 805 is also connected to the bus 804.

Generally, the following apparatus may be connected to the I/O interface 805: an input apparatus 806 including, for example, a touchscreen, a touchpad, a keyboard, a mouse, a camera, a microphone, an accelerometer, and a gyroscope; an output apparatus 807 including, for example, a liquid crystal display (LCD), a speaker, and a vibrator; the storage apparatus 808 including, for example, a magnetic tape and a hard disk drive; and a communication apparatus 809. The communication apparatus 809 may allow the electronic device 800 to perform wireless or wired communication with other devices to exchange data. Although Fig. 8 shows the electronic device 800 having various apparatus, it should be understood that it is not required to implement or have all of the shown apparatus. It may be an alternative to implement or have more or fewer apparatus.

**In** particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 809, installed from the storage apparatus 808, or installed from the ROM 802. When the computer program is executed by the processing apparatus 801, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. **In** the present disclosure, the computer-readable storage medium may be any tangible medium containing or storing a program which may be used by or in combination with an instruction execution system, apparatus, or device. **In** the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases. For example, a presentation unit may also be described as "a unit configured to present an Easter egg image in response to determining that a first operation received in a content comment section meets a preset trigger condition".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

**In** the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, an information processing method is provided. The method includes: presenting an Easter egg image in response to determining that a first operation received in a content comment section meets a preset trigger condition, where an image posting control is presented in the Easter egg image; receiving a first image input by a first user through the image posting control, and generating a target comment that includes the first image; and posting the target comment.

According to one or more embodiments of the present disclosure, at least one second image is further presented in the Easter egg image, where the second image is obtained by the following steps: obtaining a plurality of images already posted in the content comment section; determining, from the plurality of images, at least one image that meets a preset condition to form an Easter egg image set; and presenting the at least one second image in the Easter egg image set in response to receiving an Easter egg trigger operation from the user.

According to one or more embodiments of the present disclosure, the preset trigger condition includes one of the following conditions: preset comment content associated with the Easter egg image being posted; the preset comment content being included in information input in a comment information input box; or a trigger operation being performed on a first control associated with the Easter egg image.

According to one or more embodiments of the present disclosure, the second image presented in the Easter egg image is associated with the preset comment content.

According to one or more embodiments of the present disclosure, receiving the first image input by the user through the image posting control, and generating the comment content that includes the first image includes: receiving a first image and comment text that are input by the user by triggering the image posting control; and generating comment content that includes the first image and the comment text.

According to one or more embodiments of the present disclosure, before receiving the first operation, the method further includes: displaying guidance information in the content comment section, the guidance information being used to guide the execution of an operation that meets the preset trigger condition.

According to one or more embodiments of the present disclosure, receiving the first image input by the user through the image posting control includes: displaying a media content obtaining interface in response to receiving a trigger operation performed by the user on the image posting control; receiving a selection operation performed by the user on at least one user image in the media content obtaining interface; and determining a user image indicated by the selection operation as the first image.

According to one or more embodiments of the present disclosure, at least one second image posted by a second user is presented in the Easter egg image; and the method further includes: adding, to the target comment, reference information that refers to the second user.

According to one or more embodiments of the present disclosure, comment text posted by the second user is further presented in the Easter egg image.

According to one or more embodiments of the present disclosure, the comment text is displayed at an associated position of the second image.

According to one or more embodiments of the present disclosure, a second image is presented in the Easter egg image; and the method further includes: displaying, in the content comment section, a stitched image obtained by stitching the first image and the second image.

According to one or more embodiments of the present disclosure, identification information of the first user is presented at an associated position of the first image in the stitched image, and identification information of a user who posts the second image is presented at an associated position of the second image in the stitched image.

In a second aspect, according to one or more embodiments of the present disclosure, an information processing apparatus is provided. The apparatus includes: a presentation unit configured to present an Easter egg image in response to determining that a first operation received in a content comment section meets a preset trigger condition, where an image posting control is presented in the Easter egg image; a generation unit configured to receive a first image input by a first user through the image posting control, and generate a target comment that includes the first image; and a posting unit configured to post the target comment.

According to one or more embodiments of the present disclosure, at least one second image is further presented in the Easter egg image, The apparatus further includes a second image obtaining unit. The second image obtaining unit is configured to obtain the second image by the following steps: obtaining a plurality of images already posted in the content comment section; determining, from the plurality of images, at least one image that meets a preset condition to form an Easter egg image set; and presenting the at least one second image in the Easter egg image set in response to receiving an Easter egg trigger operation from the user.

According to one or more embodiments of the present disclosure, the preset trigger condition includes one of the following conditions: preset comment content associated with the Easter egg image being posted; the preset comment content being included in information input in a comment information input box; or trigger operation being performed on a first control associated with the Easter egg image.

According to one or more embodiments of the present disclosure, the second image presented in the Easter egg image is associated with the preset comment content.

According to one or more embodiments of the present disclosure, the generation unit is further configured to: receive a first image and comment text that are input by the user by triggering the image posting control; and generate comment content that includes the first image and the comment text.

According to one or more embodiments of the present disclosure, the apparatus further includes a guidance unit. The guidance unit is further configured to: display guidance information in the content comment section before the first operation is received, the guidance information being used to guide the execution of an operation that meets the preset trigger condition.

According to one or more embodiments of the present disclosure, the generation unit is further configured to: display a media content obtaining interface in response to receiving a trigger operation performed by the user on the image posting control; receive a selection operation performed by the user on at least one user image in the media content obtaining interface; and use a user image indicated by the selection operation as the first image.

According to one or more embodiments of the present disclosure, at least one second image posted by a second user is presented in the Easter egg image; The generation unit is further configured to: add, to the target comment, reference information that refers to the second user.

According to one or more embodiments of the present disclosure, comment text posted by the second user is further presented in the Easter egg image.

According to one or more embodiments of the present disclosure, the comment text is displayed at an associated position of the second image.

According to one or more embodiments of the present disclosure, a second image is presented in the Easter egg image; and the apparatus further includes a display unit configured to: display, in the content comment section, a stitched image obtained by stitching the first image and the second image.

In some embodiments, identification information of the first user is presented at an associated position of the first image in the stitched image, and identification information of a user who posts the second image is presented at an associated position of the second image in the stitched image.

**In** a third aspect, according to one or more embodiments of the present disclosure, an electronic device is provided. The electronic device includes: at least one processor and a memory, where the memory stores computer-executable instructions; and the at least one processor executes the computer-executable instructions stored in the memory, to cause the at least one processor to perform the information processing method according to the first aspect and various possible designs of the first aspect.

In a fourth aspect, according to one or more embodiments of the present disclosure, a computer-readable storage medium is provided. The computer-readable storage medium has stored therein computer-executable instructions that, when executed by a processor, cause the information processing method according to the first aspect and various possible designs of the first aspect to be implemented.

In a fifth aspect, according to one or more embodiments of the present disclosure, a computer program product is provided. The computer program product includes a computer program that, when executed by a processor, causes the information processing method according to the first aspect and various possible designs of the first aspect to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An information processing method, comprising:
presenting an Easter egg image in response to determining that a first operation received in a content comment section meets a preset trigger condition, wherein an image posting control is presented in the Easter egg image;
receiving a first image input by a first user based on the image posting control, and generating a target comment comprising the first image; and
posting the target comment.

2. The method according to claim 1, wherein at least one second image is further presented in the Easter egg image, wherein the second image is obtained by following steps:
obtaining a plurality of images already posted in the content comment section;
determining, from the plurality of images, at least one image that meets a preset condition to form an Easter egg image set; and
presenting the at least one second image in the Easter egg image set in response to receiving an Easter egg trigger operation from the user.

3. The method according to claim 2, wherein the preset trigger condition comprises one of following conditions:
preset comment content associated with the Easter egg image being posted;
the preset comment content being comprised in information input in a comment information input box; or
a trigger operation being performed on a first control associated with the Easter egg image.

4. The method according to claim 3, wherein the second image presented in the Easter egg image is associated with the preset comment content.

5. The method according to any one of claims 1 to 4, wherein receiving the first image input by the user through the image posting control, and generating the comment content that comprises the first image comprise:
receiving a first image and a comment text that are input by the user by triggering the image posting control; and
generating comment content that comprises the first image and the comment text.

6. The method according to any one of claims 1 to 5, wherein before receiving the first operation, the method further comprises:
displaying guidance information in the content comment section, wherein the guidance information is configured to instruct to perform an operation that meets the preset trigger condition.

7. The method according to any one of claims 1 to 4, wherein receiving the first image input by the user based on the image posting control comprises:
displaying a media content obtaining interface in response to receiving a trigger operation performed by the user on the image posting control;
receiving a selection operation performed by the user on at least one user image in the media content obtaining interface; and
determining a user image indicated by the selection operation as the first image.

8. The method according to claim 1, wherein at least one second image posted by a second user is presented in the Easter egg image; and the method further comprises:
adding, to the target comment, reference information that refers to the second user.

9. The method according to claim 8, wherein a comment text posted by the second user is further presented in the Easter egg image.

10. The method according to claim 9, wherein the comment text is displayed at an associated position of the second image.

11. The method according to claim 1, wherein a second image is presented in the Easter egg image; and the method further comprises:
displaying, in the content comment section, a stitched image obtained by stitching the first image and the second image.

12. The method according to claim 11, wherein identification information of the first user is presented at an associated position of the first image in the stitched image, and identification information of a user who posts the second image is presented at an associated position of the second image in the stitched image.

13. An information processing apparatus, comprising:
a presentation unit configured to present an Easter egg image in response to determining that a first operation received in a content comment section meets a preset trigger condition, wherein an image posting control is presented in the Easter egg image;
a generation unit configured to receive a first image input by a first user based on the image posting control, and generate a target comment comprising the first image; and
a posting unit configured to post the target comment.

14. The information processing apparatus according to claim 13, wherein the generation unit is specifically configured to:
receive a first image and comment text that are input by the user by triggering the image posting control; and
generate comment content that comprises the first image and the comment text.

15. The information processing apparatus according to claim 13, wherein the generation unit is specifically configured to:
display a media content obtaining interface in response to receiving a trigger operation performed by the user on the image posting control;
receive a selection operation performed by the user on at least one user image in the media content obtaining interface; and
determine a user image indicated by the selection operation as the first image.

16. The information processing apparatus according to claim 13, wherein at least one second image is further presented in the Easter egg image, and the information processing apparatus further comprises a second image obtaining unit configured to obtain the second image by following steps:
obtaining a plurality of images already posted in the content comment section;
determining, from the plurality of images, at least one image that meets a preset condition to form an Easter egg image set; and
presenting the at least one second image in the Easter egg image set in response to receiving an Easter egg trigger operation from the user.

17. The information processing apparatus according to claim 13, further comprising a guidance unit, wherein the guidance unit is configured to:
display guidance information in the content comment section before the first operation is received, wherein the guidance information is configured to instruct to perform an operation that meets the preset trigger condition.

18. The information processing apparatus according to claim 13, wherein at least one second image posted by a second user is further presented in the Easter egg image; and the generation unit is further configured to:
add, to the target comment, reference information that refers to the second user.

19. An electronic device, comprising: a processor and a memory, wherein
the memory stores computer-executable instructions; and
the processor executes the computer-executable instructions stored in the memory, to cause the processor to perform the information processing method according to any one of claims 1 to 12.

20. A computer-readable storage medium having stored therein computer-executable instructions that, when executed by a processor, cause the information processing method according to any one of claims 1 to 12 to be implemented.
